# EUROPEAN PATENT APPLICATION

(11) **EP 1 860 640 A2**
(43) Date of publication of application: **28.11.2007**
(21) Application number: 07107875.2
(22) Date of filing: 10.05.2007
(51) Int. Cl.: G09G 5/02

(54) **Apparatus, method, and medium for adjusting image quality of display device**

(30) Priority: 22.05.2006 KR 20060045853
(71) Applicant: Samsung Electronics Co., Ltd., Suwon-si, Gyeonggi-Do (KR)
(72) Inventor: Choe, Won-hee, MT.14-1, Nogseo-dong, Giheung-gu Yongin-si Gyeonggi-do (KR); Kim, In-ji, MT.14-1, Nogseo-dong, Giheung-gu Yongin-si Gyeonggi-do (KR); Kim, Chang-Yeong, MT.14-1, Nogseo-dong, Giheung-gu Yongin-si Gyeonggi-do (KR); Lee, Seong-deok, MT.14-1, Nogseo-dong, Giheung-gu Yongin-si Gyeonggi-do (KR)
(74) Representative: Grünecker, Kinkeldey, Stockmair & Schwanhäusser Anwaltssozietät

(57) **Abstract**

An apparatus, method, and medium for adjusting the image quality of a display device are provided. The apparatus for adjusting image quality of a display device includes a memory unit (110), an image quality evaluation unit (120) and an image quality adjustment unit (130). The memory unit stores sample data about a predetermined color and characteristics of the display device. The image quality evaluation unit evaluates the quality of an image which is input to the display device based on at least one of the stored sample data and the characteristics of the display device. The image quality adjustment unit adjusts the quality of the input image based on the results of the evaluation, taking into account the intensity of external light as measured by the sensor unit (150).

## Description

### CROSS-REFERENCE TO RELATED APPLICATIONS

This application claims priority benefit of Korean Patent Application No. 10-2006-0045853 filed on May 22, 2006 in the Korean Intellectual Property Office, the disclosure of which is incorporated herein by reference in its entirety.

### BACKGROUND OF THE INVENTION

### 1. Field of the Invention

The present invention relates to an apparatus, method, and medium for adjusting the image quality of a display device and, more particularly, to an apparatus, method, and medium for adjusting the image quality of a display device, which can evaluate the quality of images displayed via the display device and adjust the quality of the displayed images based on the results of the evaluation.

### 2. Description of the Related Art

Generally, the evaluation of image quality is subjectively performed by evaluators who evaluate image quality, and a reference image typically is used in the evaluation of image quality.

The evaluation of image quality using the reference image is called subjective evaluation since an evaluator compares the reference image with the image to be evaluated and then assigns a point value to the image to be evaluated according to individual behavior.

Such an evaluation of image quality using a reference image reflects the individual perceptivity of a human and requires many users and a large amount of time for the evaluation, such that it is difficult to perform the evaluation in real time and the evaluation cost is increased. Therefore, recently, in order to decrease the evaluation time and cost, a method of evaluating image quality using a source image and an evaluation image, which is a target for comparison with the source image to be evaluated, has been used.

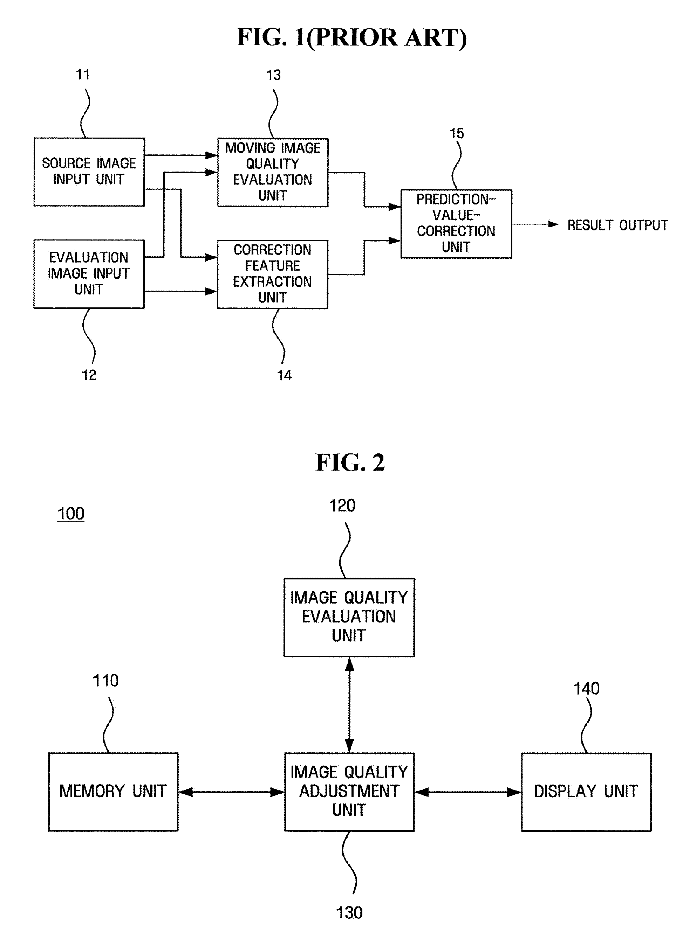

FIG. 1 is a diagram illustrating a conventional apparatus for adjusting the image quality of a display device.

As illustrated in Figure 1, the conventional apparatus for adjusting the image quality of a display device includes a source image input unit 11 that inputs a source image, which is an original moving image, an evaluation image input unit 12 that receives an image to be evaluated, a moving image quality evaluation unit 13 that evaluates the quality of the moving image using the source image and the evaluation image, a correction feature extraction unit 14 that extracts correction features based on the source image and the evaluation image, and a prediction value correction unit 15 that corrects output data of the image quality evaluation unit 13 using output data of the correction feature extraction unit 14.

In such a way, image quality is evaluated by comparing a source image with an evaluation image, and a correction value according thereto is calculated, so that objective evaluation as well as subjective evaluation is performed in a determined sequence in real time.

However, the above-described apparatus for adjusting the image quality of a display device of FIG. 1 uses the source image and the image to be evaluated so that a construction for processing the evaluation image is additionally required. Therefore, there are problems in that the cost of evaluating and adjusting image quality increases and a process for evaluating and adjusting image quality becomes complicated.

Korean Unexamined Patent Publication No. 2005-0024098 discloses a system for evaluating the quality of moving images which uses a source image and an evaluation image, extracts a correction feature vector (such as energy for each domain of the temporal and spatial frequencies, the degree of blocking, edge information, color information or a combination thereof) from each image, and then performs correction using a prediction value. This invention performs evaluation in real time and then performs objective evaluation according to a predetermined criterion. Accordingly, this invention is not a solution for resolving the problem in which the procedure for processing the evaluation image, which is the target for comparison with the source image, becomes complicated, and thus, related costs increase.

### SUMMARY OF THE INVENTION

Accordingly, the present invention has been made keeping in mind the above problems occurring in the prior art. In addition, an aspect of the present invention is to provide an apparatus, method, and medium which evaluate and adjust the quality of an input image without using an image that is a comparison target for the input image.

Additional advantages, aspects, and features of the invention will be set forth in part in the description which follows and in part will become apparent to those having ordinary skill in the art upon examination of the following or may be learned from practice of the invention.

According to an aspect of the present invention, there is provided an apparatus for adjusting image quality of a display device, the apparatus including a memory unit storing sample data about a predetermined color and characteristics of the display device, an image quality evaluation unit evaluating quality of an image which is input to the display device based on at least one of the stored sample data and the characteristics of the display device, and an image quality adjustment unit adjusting the quality of the input image based on results of the evaluation.

Additionally, according to another aspect of the present invention, there is provided a method of adjusting image quality of a display device, the method including storing sample data about a predetermined color and characteristics of the display device; evaluating quality of an image which is input to the display device based on at least one of the stored sample data and the characteristics of the display device; and adjusting the quality of the input image based on results of the evaluation.

According to another aspect of the present invention, there is provided an apparatus for adjusting image quality of a display device, the apparatus including an image quality evaluation unit to evaluate quality of an image, which is input to the display device, based on at least one of characteristics of a display device and sample data about a predetermined color; and an image quality adjustment unit to adjust the quality of the input image based on results of the evaluation.

According to another aspect of the present invention, there is provided at least one computer readable medium storing computer readable instructions that control at least one processor to implement the methods of the present invention.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a diagram illustrating a conventional apparatus for adjusting the image quality of a display device;
FIG. 2 is a diagram illustrating an apparatus for adjusting the image quality of a display device according to a first exemplary embodiment of the present invention;
FIG. 3 is a diagram illustrating an apparatus for adjusting the image quality of a display device according to a second exemplary embodiment of the present invention;
FIG. 4 is a diagram illustrating a method of adjusting the image quality of a display device according to a first exemplary embodiment of the present invention; and
FIG. 5 is a diagram illustrating a method of adjusting the image quality of a display device according to a second exemplary embodiment of the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

The present invention is described hereinafter with reference to flowchart illustrations of user interfaces, methods, and computer program products according to exemplary embodiments. It will be understood that each block of the flowchart illustrations, and combinations of blocks in the flowchart illustrations, can be implemented as computer program instructions. These computer program instructions can be provided to a processor of a general purpose computer, special purpose computer, or other programmable data processing apparatus to produce a machine, such that the instructions, which are executed on the processor of the computer or other programmable data processing apparatus, implement functions (operations or steps) specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce a manufactured article to implement the function (operation or step) specified in the flowchart block or blocks.

The computer program instructions may also be loaded into a computer or other programmable data processing apparatus to cause a series of operational steps to be performed on the computer or other programmable apparatus to produce a computer implemented process such that the instructions that execute in the computer or other programmable apparatus implement steps, functions, or operations specified in the flowchart block or blocks.

Furthermore, each block of the flowchart illustrations may represent a module, segment, or portion of code, which comprises one or more executable instructions for implementing the specified logical function(s) (operation(s) or step(s)). It should also be noted that in some alternative implementations, the functions (operations or steps) noted in the blocks may occur in a different order. For example, two blocks shown in succession may in fact be executed substantially concurrently, or the blocks may sometimes be executed in reverse order, depending upon the functionality (operation or step) involved.

FIG. 2 is a diagram illustrating an apparatus for adjusting the image quality of a display device according to an exemplary embodiment of the present invention.

As illustrated, the apparatus for adjusting the image quality of a display device according to a first exemplary embodiment of the present invention may include a memory unit 110, an image quality evaluation unit 120, an image quality adjustment unit 130 and a display unit 140.

In this exemplary embodiment of the present invention, it can be understood that a display device is a device comprising a display module capable of displaying images, such as a digital television. As a result, in this exemplary embodiment of the present invention, the display device may include a Personal Digital Assistant (PDA), a portable media player (PMP), a digital camera, a portable game player, a set-top box, a portable (mobile) phone and the like, on which the display module capable of displaying images is mounted, as well as a television.

The memory unit 110 may store sample data including colors, which enable a user to perceive a certain object or characteristics of the display device.

Although, in this exemplary embodiment of the present invention, the case in which the sample data and the characteristics of the display device are stored in the memory unit 110 is described as an example, the present invention is not limited to this, and the sample data and the characteristics of the display device may be stored in respective separately constructed elements.

In this case, the sample data may include reference colors for colors, which enable a user to subjectively perceive predetermined objects or figures, for example, the color of the sky, the color of fruit, the color of a tree, the color of a mountain, the color of skin, and the color of hair. Furthermore, the sample data is not limited to the above-described examples, and may include colors which are subjectively perceived for various objects and figures.

The characteristics of the display device may include resolution, color gamut, gamma, and saturation, but are not limited thereto.

The image quality evaluation unit 120 can analyze images received by the display device and evaluate the quality of the input images by comparing the results of the analysis with at least one of the sample data and the characteristics of the display device, which are stored in the memory unit 110.

In detail, the image quality evaluation unit 120 can compare the color of an object or figure, which is included in the predetermined frame of the input image, with a reference color for an identical object or figure which is extracted from the sample data, such as a stored color or a preferred color which is stored in the above-described memory unit 110. In this case, the image quality evaluation unit 120 performs color-correction by applying a characteristic value, such as a value related to the color-expression ability of a display, to the sample data stored in the memory unit 110, calculates the value of the difference between the color of an object or figure and the reference color by comparing them with each other, and then evaluates the quality of input images based on the magnitude of the calculated difference value. For example, when a tree is included in the predetermined frame of an input image, the image quality evaluation unit 120 can extract a reference color for the tree from the sample date stored in the memory unit 110 and compare the extracted reference color with the color of the tree included in the predetermined frame.

Furthermore, the image quality evaluation unit 120 calculates the difference value between the optimal characteristic value of image quality, which is generated based on the characteristics of the display device for performing a display function, with the characteristic value of image quality, which is calculated based on the characteristic of an input image, by comparing them with each other, and then evaluates the quality of the input image based on the calculated difference value. For example, when the optimal characteristic value is a first resolution within the resolution range supported by the display device, and the resolution of an input image is a second resolution, the image quality evaluation unit 120 compares respective resolutions and then calculates the difference value.

When the quality of the input image has been evaluated by the image quality evaluation unit 120 based on at least one of the sample data and the characteristics of the display device stored in the memory unit 110, the image quality adjustment unit 130 can adjust the quality of the input image based on the difference value resulting from the evaluation of the image quality. In detail, the image quality adjustment unit 130 corrects the input image by the difference value resulting from the evaluation of image quality by the image quality evaluation unit 120, and adjusts the color of a specific object or figure included in the input image to the reference color of the sample data stored in the memory unit 110, thereby adjusting the characteristics of the input image to be suitable for the characteristics of the display device.

The display unit 140 displays the image, the image quality of which was adjusted by the image quality adjustment unit 130.

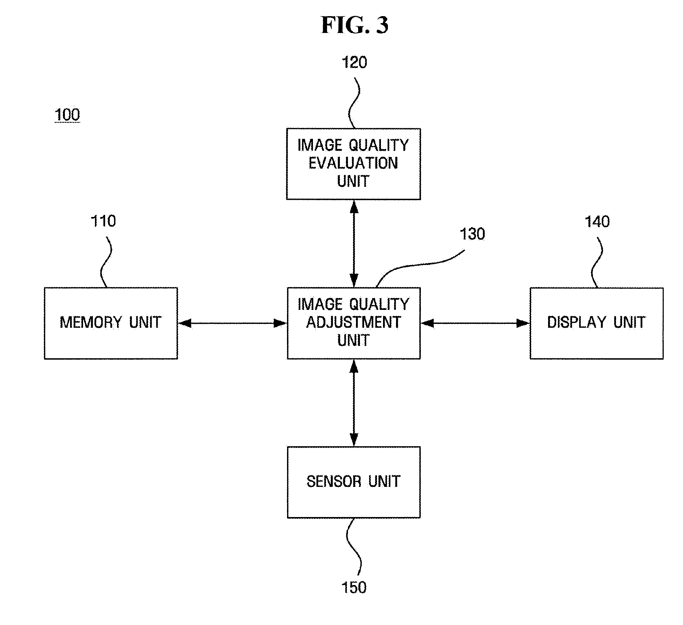

FIG. 3 is a diagram illustrating an apparatus for adjusting the image quality of a display device according to a second exemplary embodiment of the present invention.

As illustrated, the apparatus 100 for adjusting the image quality of a display device according to the second exemplary embodiment of the present invention may further include a sensor unit 150 for detecting the intensity of external light at the place in which the display device is located. In this case, the reason why the sensor unit 150 for detecting the intensity of external light is provided in FIG. 2 is that the subjectively perceived image quality may vary when the intensity of external light varies at the place in which the display device is located even though the image quality remains the same.

As a result, the image quality evaluation unit 120 can vary the reference color included in the sample data and the characteristics of the display device stored in the memory unit 110 according to the intensity of external light detected by the sensor unit 150.

For example, since the subjectively perceived color may not be natural due to the external light in the case in which the color of a certain object or figure included in the predetermined frame of an input image is identical to the reference color of the sample data included in the memory unit 10 when the intensity of external light at the place in which the display device is located is relatively high, the image quality evaluation unit 120 may alter the reference color included in the sample data based on the detected external light, and then evaluate the color of the certain object or figure included in the predetermined frame of the input image.

Furthermore, since the subjectively experienced color may not be natural due to external light even when the intensity of external light in the place in which the display device is located is relatively low, as in the case where the above-described intensity of external light is relatively high, the image quality evaluation unit 120 may alter the reference color included in the sample data based on the detected external light, and then evaluate the color of the color of the certain object or figure included in the predetermined frame of the input image.

In addition, the image quality evaluation unit 120 can alter the characteristics of the display device based on the intensity of external light detected by the sensor unit 150, besides reference color of the sample data. For example, since the subjectively experienced contrast may not be natural due to the external light in the case in which the contrast of the display device is identical to the contrast of the input image when the intensity of external light at the place in which the display device is located is relatively high or low, the image quality evaluation unit 120 may evaluate the quality of the input image taking into account the intensity of external light detected by the sensor unit 150.

Although, in FIG. 3, the case in which image quality is evaluated based on the intensity of external light at the place in which the display device is located is described as an example, this is only an example to aid in understanding of the present invention, and the present invention is not limited to this. The characteristics of the input image can be evaluated based on the sample data and the characteristics of the display device stored in the memory unit 110 along with a surrounding environment (for example, the color of the surrounding environment) in the place in which the display device is located.

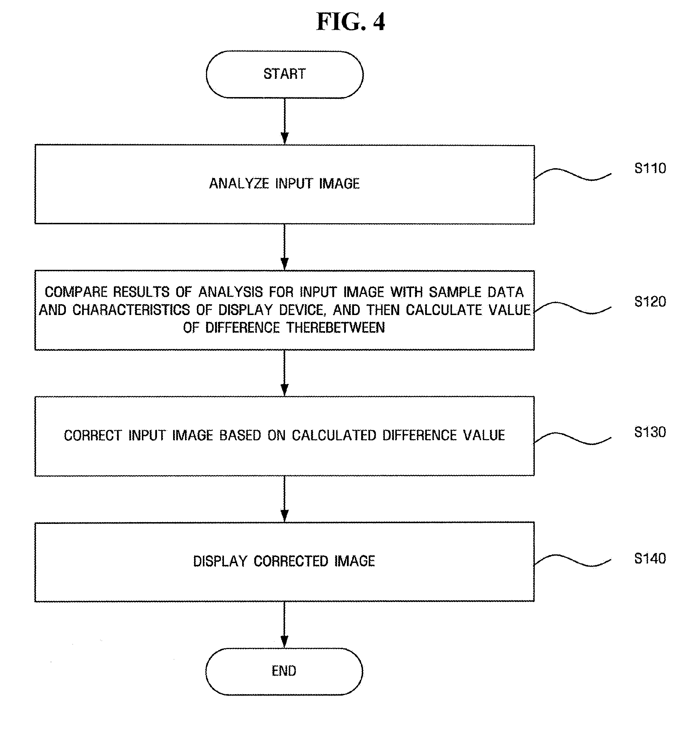

FIG. 4 is a diagram illustrating a method of adjusting the image quality of a display device according to a first exemplary embodiment of the present invention. In this case, the method of FIG. 4 is understood to be a method of adjusting the image quality of a display device using the above-described apparatus for adjusting the image quality of the display device of FIG. 1.

As illustrated, in the method of adjusting the image quality of a display device according to the first exemplary embodiment of the present invention, the image quality evaluation unit 120 analyzes a predetermined image when the image is input at step S110. In this exemplary embodiment of the present invention, the image quality evaluation unit 120 evaluates the input image based on the characteristics of the display device and the reference color included in sample data stored in the memory unit 110, so that the color and the characteristics are analyzed with reference to the input image, but the present invention is not limited to them.

The image quality evaluation unit 120 compares the results of the analysis with the sample data and the characteristics of the display device, which are stored in the memory unit 110, and then calculates the value of the difference therebetween at step S120. In order words, the image quality evaluation unit 120 calculates the difference value by comparing the reference color included in the sample data with the color of the input image and calculates the difference value by comparing the characteristics of the input image with the characteristics of the display device. Although, in this exemplary embodiment, the case in which the image quality evaluation unit 120 calculates the value of difference from the input image based on the sample data and the characteristics of the display device is described as an example, this is only an example for helping the understanding the present invention, and thus the present invention is not limited to this, and the difference value may be calculated based on at least one of the sample data and the characteristics of the display device.

The image quality adjustment unit 130 performs the correction of the input image based on the difference value calculated by the image quality evaluation unit 120 at step S130. In this case, the correction performed by the image quality adjustment unit 130 can be understood as the correction of the input image by the difference value calculated at step S120.

The display unit 140 displays the image, the image quality of which was adjusted by the image quality adjustment unit 130 at step S140.

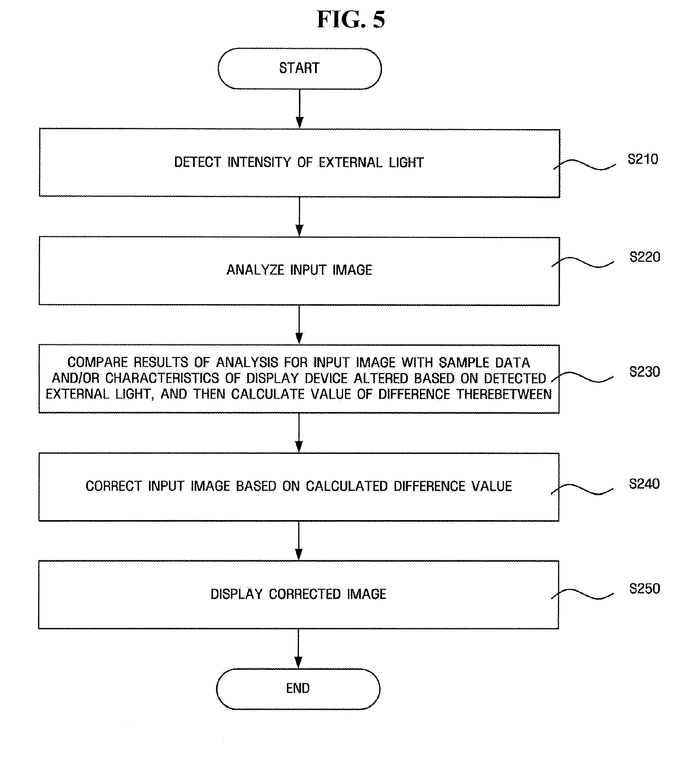

FIG. 5 is a diagram illustrating a method of adjusting the image quality of a display device according to a second exemplary embodiment of the present invention. In this case, the method is understood to be a method of adjusting the image quality of a display device using the above-described apparatus for adjusting the image quality of the display device of FIG. 2. In other words, FIG. 4 can be understood to be an example of the case in which the intensity of external light at the place in which the display device is located is considered.

As illustrated, in the method of adjusting the image quality of a display device according to the second exemplary embodiment of the present invention, first, the sensor unit 150 detects the intensity of external light at the place in which the display device is located at step S210. In this case, the sensor unit 150 may be constructed to be integrated with the display device, or may be constructed separately to deliver the detected intensity of external light to the display device via a predetermined interface cable. Furthermore, the case in which the sensor unit 150 is implemented using an optical sensor, such as a photo diode, a photo transistor, or a photoconductive cell, which generates signals having different magnitudes in response to the intensity of external light, is described as an example below.

As described above, the reason why the intensity of external light at the place in which the display device is located is detected is that the subjectively perceived image quality may vary when the intensity of external light varies at the place in which the display device is located even though the image quality is the same.

The image quality evaluation unit 120 analyzes a predetermined image when the image is input at step S220. In this exemplary embodiment of the present invention, the image quality evaluation unit 120 evaluates the quality of the input image based on the characteristics of the display device and the reference color included in sample data, which are stored in the memory unit 110, so that the color and the characteristics of the input image are analyzed, but the present invention is not limited thereto.

The image quality evaluation unit 120 compares the results of the analysis of step S220, described above, with the sample data and the characteristics of the display device which are stored in the memory unit 110 and then calculates the difference value therebetween at step S230. For example, the image quality evaluation unit 120 alters the reference color of the sample data or the characteristics of the display device according to the detected external light and then compares it with that of the input image, thereby calculating the difference value. Although, in this exemplary embodiment, the case in which the reference color of the sample data or the characteristics of the display device are altered according to the detected intensity of external light is describe as an example, the present invention is not limited to this, so that the what is analyzed in the input image may be altered.

Furthermore, although, in this exemplary embodiment, the case in which the image quality evaluation unit 120 uses difference values together when calculating the difference values with the input image based on the sample data and the characteristics of the display device is described as an example, this is only an example to aid in understanding of the present invention, so that the difference value may be calculated based on at least one of the sample data and the characteristics of the display device.

The image quality adjustment unit 130 performs the correction of the input image based on the difference value calculated by the image quality evaluation unit 120 at step S240. In this case, the correction performed by the image quality adjustment unit 130 can be understood as the correction of the input image by the difference value calculated at step S120.

The display unit 140 displays the image, the image quality of which has been adjusted by the image quality adjustment unit 130, at step S250.

The term 'unit', as used herein, denotes, but is not limited to, a software or hardware component, such as a Field Programmable Gate Array (FPGA) or Application Specific Integrated Circuit (ASIC), which performs certain tasks. A unit may advantageously be configured to reside on the addressable storage medium and may be configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or may be further separated into additional components and units. However, the display unit 140 may include other items such as a display screen.

In addition to the above-described exemplary embodiments, exemplary embodiments of the present invention can also be implemented by executing computer readable code/instructions in/on a medium/media, e.g., a computer readable medium/media. The medium/media can correspond to any medium/media permitting the storing and/or transmission of the computer readable code/instructions. The medium/media may also include, alone or in combination with the computer readable code/instructions, data files, data structures, and the like. Examples of code/instructions include both machine code, such as produced by a compiler, and files containing higher level code that may be executed by a computing device and the like using an interpreter. In addition, code/instructions may include functional programs and code segments.

The computer readable code/instructions can be recorded/transferred in/on a medium/media in a variety of ways, with examples of the medium/media including magnetic storage media (e.g., floppy disks, hard disks, magnetic tapes, etc.), optical media (e.g., CD-ROMs, DVDs, etc.), magneto-optical media (e.g., floptical disks), and hardware storage devices (e.g., read only memory media, random access memory media, flash memories, etc.). The medium/media may also be a distributed network (wired or wireless), so that the computer readable code/instructions are stored/transferred and executed in a distributed fashion. The computer readable code/instructions may be executed by one or more processors. The computer readable code/instructions may also be executed and/or embodied in at least one application specific integrated circuit (ASIC) or Field Programmable Gate Array (FPGA).

In addition, one or more software modules or one or more hardware modules may be configured in order to perform the operations of the above-described exemplary embodiments.

The term "module", as used herein, denotes, but is not limited to, a software component, a hardware component, a plurality of software components, a plurality of hardware components, a combination of a software component and a hardware component, a combination of a plurality of software components and a hardware component, a combination of a software component and a plurality of hardware components, or a combination of a plurality of software components and a plurality of hardware components, which performs certain tasks. A module may advantageously be configured to reside on the addressable storage medium/media and configured to execute on one or more processors. Thus, a module may include, by way of example, components, such as software components, application specific software component, object-oriented software components, class components and task components, processes, functions, operations, execution threads, attributes, procedures, subroutines, segments of program code, drivers, firmware, microcode, circuitry, data, databases, data structures, tables, arrays, and variables. The functionality provided for in the components or modules may be combined into fewer components or modules or may be further separated into additional components or modules. Further, the components or modules can operate at least one processor (e.g. central processing unit (CPU)) provided in a device. In addition, examples of a hardware components include an application specific integrated circuit (ASIC) and Field Programmable Gate Array (FPGA). As indicated above, a module can also denote a combination of a software component(s) and a hardware component(s). These hardware components may also be one or more processors.

The computer readable code/instructions and computer readable medium/media may be those specially designed and constructed for the purposes of the present invention, or they may be of the kind well-known and available to those skilled in the art of computer hardware and/or computer software.

As described above, according to the apparatus, method, and medium for adjusting the image quality of a display device of the present invention, in order to evaluate the image quality of an input image, an image serving as a comparison target is not used, and the quality of the input image is evaluated alone based on the predetermined image quality evaluation references and the characteristics of a display device, and then the image quality is adjusted based on the results of the evaluation, so that there is an advantage in that the constructions and procedures for the image quality evaluation and adjustment can be simplified.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

## Claims

1. An apparatus for adjusting image quality of a display device, the apparatus comprising:
a memory unit to store sample data about a predetermined color and characteristics of the display device;
an image quality evaluation unit to evaluate quality of an image, which is input to the display device, based on at least one of the stored sample data and the characteristics of the display device; and
an image quality adjustment unit to adjust the quality of the input image based on results of the evaluation.

2. The apparatus of claim 1, wherein the sample data comprises a reference color for a specific object or figure which is included in a predetermined frame of the input image.

3. The apparatus of claim 1, wherein the characteristics of the display device comprise at least one of resolution, color gamut, gamma and saturation of the display device.

4. The apparatus of claim 1, wherein the image quality evaluation unit compares a color of the input image with a color of an identical object or figure of the sample data, and calculates a difference value resulting from the comparison.

5. The apparatus of claim 4, wherein image quality adjustment unit corrects the color of the specific object or figure included in the input image based on the calculated difference value.

6. The apparatus of claim 1, wherein the image quality evaluation unit analyzes characteristics of the input image, then compares the characteristics of the input image with the characteristics of the display device, and calculates a difference value based on results of the comparison.

7. The apparatus of claim 6, wherein the image quality adjustment unit adjusts the characteristics of the input image based on the calculated difference value.

8. The apparatus of claim 1, further comprising a sensor unit to detect at least intensity of external light at a place in which the display device is located.

9. The apparatus of claim 8, wherein the image quality evaluation unit alters at least one of the sample data and the characteristics of the display device stored in the memory unit according to the detected intensity of external light.

10. The apparatus of claim 9, wherein the image quality evaluation unit evaluates the quality of the input image based on at least one of the altered sample data and the altered characteristics of the display device.

11. A method of adjusting image quality of a display device, the method comprising:
storing sample data about a predetermined color and characteristics of the display device;
evaluating quality of an image, which is input to the display device, based on at least one of the stored sample data and the characteristics of the display device; and
adjusting the quality of the input image based on results of the evaluation.

12. The method of claim 11, wherein the sample data comprises a reference color for a specific object or figure which is included in a predetermined frame of the input image.

13. The method of claim 11, wherein the characteristics of the display device comprise at least one of resolution, color gamut, gamma and saturation of the display device.

14. The method of claim 11, wherein the evaluating image quality comprises:
comparing a color of the input image with a color of an identical object or figure of the sample data; and
calculating a difference value resulting from the comparison.

15. The method of claim 14, wherein the adjusting image quality comprises adjusting the color of the specific object or figure included in the input image based on the calculated difference value.

16. The method of claim 11, wherein the evaluating image quality comprises:
analyzing characteristics of the input image;
comparing characteristics of the input image with the characteristics of the display device; and
calculating a difference value based on results of the comparison.

17. The method of claim 16, wherein the adjusting image quality comprises adjusting characteristics of the input image based on the calculated difference value.

18. The method of claim 11, further comprising detecting at least intensity of external light at a place in which the display device is located.

19. The method of claim 18, wherein the evaluating image quality comprises altering at least one of the sample data and the characteristics of the display device stored in the memory unit according to the detected intensity of external light.

20. The method of claim 19, wherein the evaluating image quality comprises evaluating quality of the input image based on at least one of the altered sample data and the altered characteristics of the display device.

21. At least one computer readable medium storing computer readable instructions that control at least one processor to implement the method of claim 11.

22. An apparatus for adjusting image quality of a display device, the apparatus comprising:
an image quality evaluation unit to evaluate quality of an image, which is input to the display device, based on at least one of characteristics of a display device and sample data about a predetermined color; and
an image quality adjustment unit to adjust the quality of the input image based on results of the evaluation.

23. The apparatus of claim 22, further comprising a sensor unit to detect at least intensity of external light at a place in which the display device is located.

24. The apparatus of claim 23, wherein the image quality evaluation unit alters at least one of the sample data and characteristics of the display device according to the detected intensity of external light.
